# EUROPEAN PATENT SPECIFICATION

(11) **EP 3 913 431 B1**
(45) Date of publication and mention of the grant of the patent: **23.04.2025**
(21) Application number: 19910840.8
(22) Date of filing: 18.12.2019
(51) Int. Cl.: G03B 17/02, H04N 13/239, G03B 35/08, G03B 17/55, H04N 23/51, H04N 23/52, H04N 23/57, H04N 13/00

(54) **CAMERA DEVICE**
KAMERAVORRICHTUNG
DISPOSITIF DE CAMÉRA

(30) Priority: 16.01.2019 JP 2019005218
(43) Date of publication of application: 24.11.2021
(73) Proprietor: Hitachi Astemo, Ltd., Hitachinaka-shi, Ibaraki 312-8503 (JP)
(72) Inventor: YAMAGUCHI, Akihiro, Tokyo 100-8280 (JP); YAMAGUCHI, Kei, Tokyo 100-8280 (JP); ARAI, Satoshi, Tokyo 100-8280 (JP); SHINOHARA, Hidenori, Hitachinaka-shi, Ibaraki 312-8503 (JP); TAKEUCHI, Kenichi, Hitachinaka-shi, Ibaraki 312-8503 (JP)
(74) Representative: MERH-IP Matias Erny Reichl Hoffmann Patentanwälte PartG mbB
(86) International application number: PCT/JP2019/049659
(87) International publication number: WO 2020/149085

(56) References cited:
- WO-A1-2015/045206
- WO-A1-2017/072996
- WO-A1-2018/079240
- WO-A1-2018/128083
- JP-A- 2016 177 257
- JP-A- 2016 208 466
- KR-A- 20100 098 879
- TW-A- 201 240 591
- US-A1- 2016 129 839
- US-A1- 2018 262 738
- US-A1- 2019 246 521

## Description

### Technical Field

The present invention relates to a camera apparatus.

### Background Art

In recent years, cameras have been increasingly used in various fields, and there is a demand for products with high processing performance, light weight, and low cost. When the processing performance of the camera is increased, generation of heat associated with execution of calculation is not avoided, and thus, a problem of heat dissipation arises. PTL 1 discloses an imaging unit including a plurality of imaging devices, a housing that holds the plurality of imaging devices, and a circuit board. The imaging unit includes a heat transfer member provided in contact with the housing or the circuit board, and the heat transfer member has thermal conductivity larger than thermal conductivity of the housing, and includes an attachment portion for an installation target member of the imaging unit. Furthermore, PTL 2 discloses an integrated overhead console assembly for a vehicle, wherein a camera module thereof, comprises a mounting part to which a pair of lenses and a pair of image sensors are coupled in a state of being longitudinally spaced apart from each other and through which the lenses and the image sensors are coupled to an upper surface of a camera holder, wherein a lower cover assembly which accommodates the image processing board and through which the image processing board is coupled to a lower surface of the camera holder, and wherein the lower cover assembly is made of highly thermally conductive material, and is in contact with a heat generating region of the image processing board. Eventually, PTL 3 discloses a light unit, wherein heat generated from the light emitting device may be radiated from a mounting substrate via a holding member so that heat dissipation may be advanced.

### Citation List

### Patent Literature

PTL 1: JP 2016-14564 A
PTL 2: US 2016/129839 A1
PTL 3: WO 2015/045 206 A1

### Summary of Invention

### Technical Problem

In the invention described in PTL 1, there is room for improvement in achieving both heat dissipation and light weight.

### Solution to Problem

The present invention is provided with features as set out in the appended set of claims. Preferred embodiments of the present invention are described in the dependent claims.

### Advantageous Effects of Invention

According to the present invention, it is possible to achieve both the heat dissipation and the weight reduction. Other objects, configurations, and effects will be made apparent in the following description of the preferred embodiments.

### Brief Description of Drawings

[FIG. 1] FIG. 1 is a schematic configuration diagram of a camera apparatus 1000, which is not encompassed by the wording of the claims but is considered as useful for understanding the invention.
[FIG. 2] FIG. 2 is an enlarged view showing the vicinity of attachment reference surfaces 1111 of a camera unit attachment portion 1110.
[FIG. 3] FIG. 3 is an exploded perspective view of a camera apparatus 2000 according to a second embodiment.
[FIG. 4] FIG. 4 is an assembly view of the camera apparatus 2000 according to the second embodiment.
[FIG. 5] FIG. 5 is an exploded perspective view of a camera apparatus 2000 according to a third embodiment, which is not encompassed by the wording of the claims but is considered as useful for understanding the invention.
[FIG. 6] FIG. 6 is a cross-sectional view taken along a line VI-VI in FIG. 5.
[FIG. 7] FIG. 7 is an exploded perspective view of a camera apparatus 2000 according to a fourth embodiment, which is not encompassed by the wording of the claims but is considered as useful for understanding the invention.
[FIG. 8] FIG. 8 is a cross-sectional view taken along a line VIII-VIII in FIG. 7.

### Description of Embodiments

The following description and drawings are examples for describing the present invention, and are appropriately omitted and simplified in order to clarify the description. The present invention can be implemented in other various forms. Unless otherwise limited, each component may be singular or plural.

### -First Embodiment-

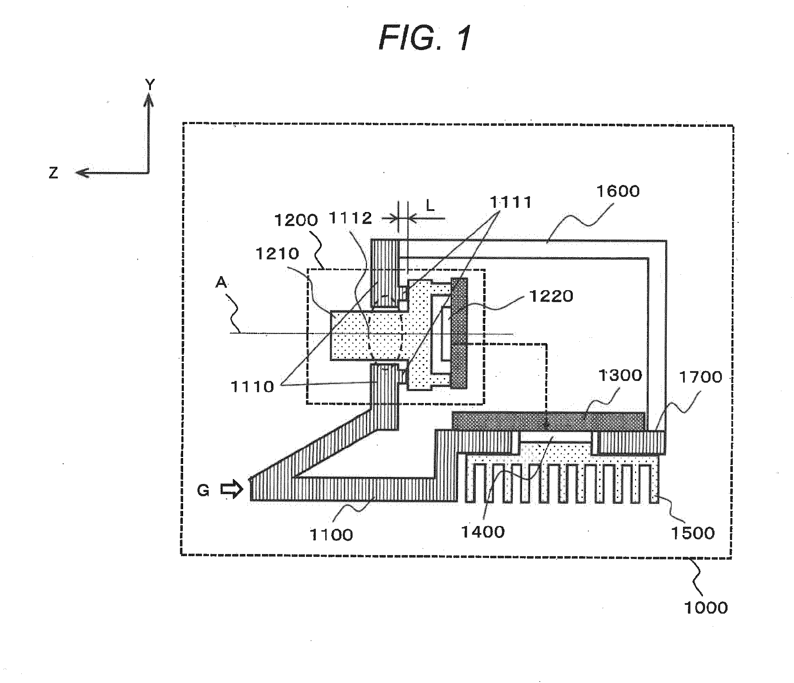

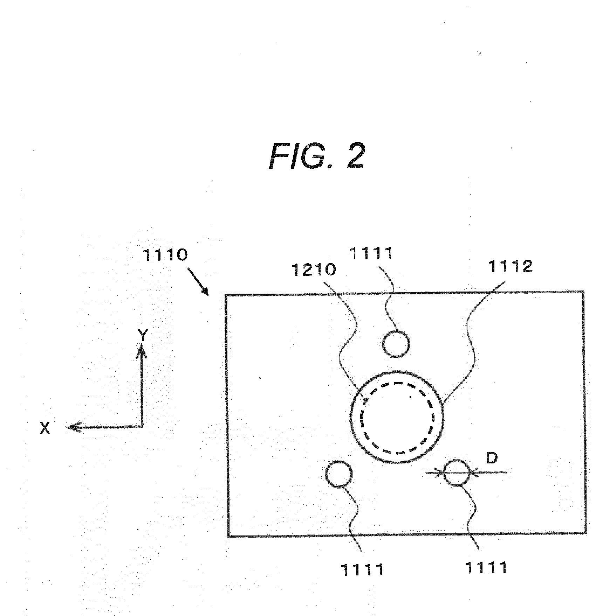

A first embodiment of a camera apparatus will be described with reference to FIGS. 1 and 2. It is noted that the first embodiment is not encompassed by the wording of the claims but is considered as useful for understanding the invention.

Positions, sizes, shapes, and ranges of components illustrated in the drawings may not necessarily represent actual positions, sizes, shapes, and ranges in order to facilitate understanding of the invention. Thus, the present invention is not necessarily limited to the positions, sizes, shapes, and ranges disclosed in the drawings.

FIG. 1 is a schematic configuration diagram of a camera apparatus 1000. To clarify the configuration, a Y-axis and a Z-axis orthogonal to each other are defined as shown in FIG. 1. Although not illustrated in FIG. 1, there is also an X-axis orthogonal to the Y-axis and the Z-axis. The camera apparatus 1000 includes a housing 1100, a camera unit 1200, a circuit board 1300, a processing device 1400, a heat dissipation member 1500, and a cover 1600.

The camera unit 1200 includes a lens unit 1210 and an imaging element 1220. Optical information acquired from the outside by the lens unit 1210 forms an image on the imaging element 1220. The imaging element 1220 transfers captured image information to the processing device 1400 via a cable (not illustrated). The camera unit 1200 is attached to the housing 1100 via attachment reference surfaces 1111 provided at a camera unit attachment portion 1110 of the housing 1100. The lens unit 1210 passes through an opening 1112 provided in the camera unit attachment portion 1110. The attachment reference surfaces 1111 protrude from the camera unit attachment portion 1110 to the right side in the drawing, and a protrusion amount is L. An optical axis A of the camera unit 1200 is parallel to the Z-axis.

FIG. 2 is an enlarged view illustrating the vicinity of the attachment reference surfaces 1111 of the camera unit attachment portion 1110. However, in this enlarged view, the camera unit attachment portion 1110 is viewed from the right side of FIG. 1, for example, from the side of the imaging element 1220. Three small circles shown in FIG. 2 are the attachment reference surfaces 1111, and a large circle shown in the center of FIG. 2 is the opening 1112. The attachment reference surfaces 1111 are arranged so as to surround the opening 1112. When it is assumed that a diameter of the attachment reference surface 1111 is D, the diameter D is larger than the protrusion amount L. Referring back to FIG. 1, the description is continued.

The processing device 1400 is mounted on the circuit board 1300, processes a captured image obtained by capturing the outside by the camera unit 1200, and calculates a distance to a subject. Various known methods can be used as a method for calculating the distance, and for example, the distance may be calculated from a position of the subject in the captured image in a height direction. The processing device 1400 may be any of a microcomputer, a rewritable logic circuit, and an application specific integrated circuit. A temperature of the processing device 1400 increases with an operation.

The heat dissipation member 1500 is in direct contact with the processing device 1400 and dissipates heat generated from the processing device 1400. However, the heat dissipation member 1500 may be in indirect contact with the processing device 1400 via a heat dissipation gel, a heat dissipation sheet, or the like. The cover 1600 is attached to the housing 1100 with an adhesive 1700 to physically protect internal components such as the camera unit 1200, the circuit board 1300, and the processing device 1400. As illustrated in FIG. 1, the cover 1600 covers the circuit board 1300 and the processing device 1400 in cooperation with the housing 1100. Elastic modulus of the adhesive 1700 is lower than elastic modulus of the housing 1100 and the cover 1600. Thus, when the cover 1600 is deformed by heat or an external force, the adhesive 1700 that is more easily deformed than the housing 1100 absorbs the influence.

At least the camera unit attachment portion 1110 of the housing 1100 is a resin-molded body containing inorganic fillers. For example, the housing 1100 has a gate at a position of a symbol G illustrated at the lower left portion in the drawing. That is, the housing 1100 including the camera unit attachment portion 1110 is formed by being filled with the resin containing the inorganic fillers from the position illustrated at the lower left portion of the drawing. Thus, among the inorganic fillers contained in the attachment reference surface 1111, a proportion of the inorganic fillers facing a direction parallel to the attachment reference surface 1111 is larger than a proportion of the inorganic fillers facing a direction perpendicular to the attachment reference surface 1111. The resin filled from the gate contains 20% to 80% of the inorganic fillers. The inorganic fillers contained in the resin are fibrous fillers having a length of 50 µm to 500 µm and an aspect ratio of 5 or more.

According to the aforementioned first embodiment, the following advantageous effects are obtained.
(1) The camera apparatus 1000 includes the housing. 1100 that has the camera unit attachment portion 1110, the camera unit 1200 that is attached to the camera unit attachment portion 1110 of the housing 1100, the processing device 1400 that calculates the distance to the subject based on outside information acquired by the camera unit 1200, the circuit board 1300 on which the processing device 1400 is mounted, and the heat dissipation member 1500 that has thermal conductivity higher than thermal conductivity of the housing 1100 and dissipates the heat generated by the processing device 1400. The camera unit attachment portion 1110 is the resin-molded body containing the inorganic fillers. The attachment reference surfaces 1111 of the camera unit are present at the camera unit attachment portion 1110. The camera unit 1200 is attached to the housing 1100 via the attachment reference surfaces 1111. On the attachment reference surface 1111, a proportion of the inorganic fillers oriented in an in-plane direction of the attachment reference surface 1111 is larger than a proportion of the inorganic fillers oriented in an optical axis direction. Thus, the camera apparatus 1000 can ensure heat dissipation while using a light weight resin for the housing 1100. That is, the camera apparatus 1000 can achieve both heat dissipation and weight reduction. This advantage will be described in detail below.

In the related art, a die-cast product such as an iron-based alloy or an aluminum-based alloy has been generally used as a material of the housing of the camera apparatus. On the other hand, in recent years, in particular, in an in-vehicle camera apparatus, the use of the resin as the housing material has been promoted in order to achieve device weight reduction and cost reduction. One of problems caused by the use of the resin as the housing material of the camera apparatus is deterioration in heat dissipation.

The in-vehicle camera apparatus used in a driving assistance system such as an automatic brake includes a processing device that calculates the distance to the subject based on the image acquired from the outside. This processing device generates a large amount of heat in order to process a large amount of image data, and needs to release heat to the housing and other heat dissipation members in order to prevent overheating. Accordingly, when the housing material is changed from metal to the resin, since the thermal conductivity and heat capacity of the housing are reduced, the heat dissipation deteriorates unless any countermeasure is taken.

Thus, the camera apparatus 1000 according to the first embodiment resolves the problems caused by the housing 1100 made of the resin by including the heat dissipation member 1500 that has thermal conductivity higher than thermal conductivity of the housing 1100 and dissipates the heat generated by the processing device 1400.

Due to the use of the resin for the housing 1100, the surface roughness of the attachment reference surface 1111 of the camera unit 1200 may become a problem. In general, since the surface roughness of the resin member molded by a process such as injection molding is about 1/5 to 1/10 of that of the metal die-cast product, the attachment reference surface can be accurately formed without postprocessing. However, when the housing is made of resin, since the material containing the inorganic fillers is generally used as a reinforcing material in order to secure rigidity and dimensional stability. When the inorganic fillers of the resin material are added the surface roughness of the reference surface increases, and thus, there is a possibility that the attachment accuracy of the camera unit decreases. However, in the camera apparatus 1000 according to the first embodiment, since the gate position is at a lower left position in FIG. 1, and the diameter D of the attachment reference surface 1111 is larger than the protrusion amount L, the proportion of the inorganic fillers oriented in the in-plane direction of the attachment reference surface 1111 is larger than the proportion of the inorganic fillers oriented in the optical axis direction. Thus, even when the resin contains the inorganic fillers, it is possible to obtain the attachment reference surface with high surface accuracy.

(2) The cover 1600 is fixed to the housing 1100 with the adhesive 1700. The elastic modulus of the adhesive 1700 is lower than the elastic modulus of the housing 1100 and the cover 1600. Thus, even though the cover 1600 is deformed, the deformation is hardly transmitted to the housing 1100.

(3) The housing 1100 is the resin-molded body containing 20% to 80% of inorganic fillers, and the inorganic fillers are the fibrous fillers having a length of 50 µm to 500 µm and an aspect ratio of 5 or more.

### (Modification Example 1)

In the first embodiment, although the shape of the attachment reference surface 1111 is the circle, the shape of the attachment reference surface 1111 may be a polygon. In the first embodiment, although three attachment reference surfaces 1111 are provided, at least two attachment reference surfaces 1111 may be provided.

### (Modification Example 2)

The cover 1600 may be fixed to the housing 1100 without using the adhesive 1700. For example, snap-fit may be used.

### (Modification Example 3)

The proportion of the inorganic fillers contained in the resin is not limited to 20% to 80%. The length of the inorganic filler is not limited to the range of 50 µm to 500 µm, and the aspect ratio may be less than 5.

### -Second Embodiment-

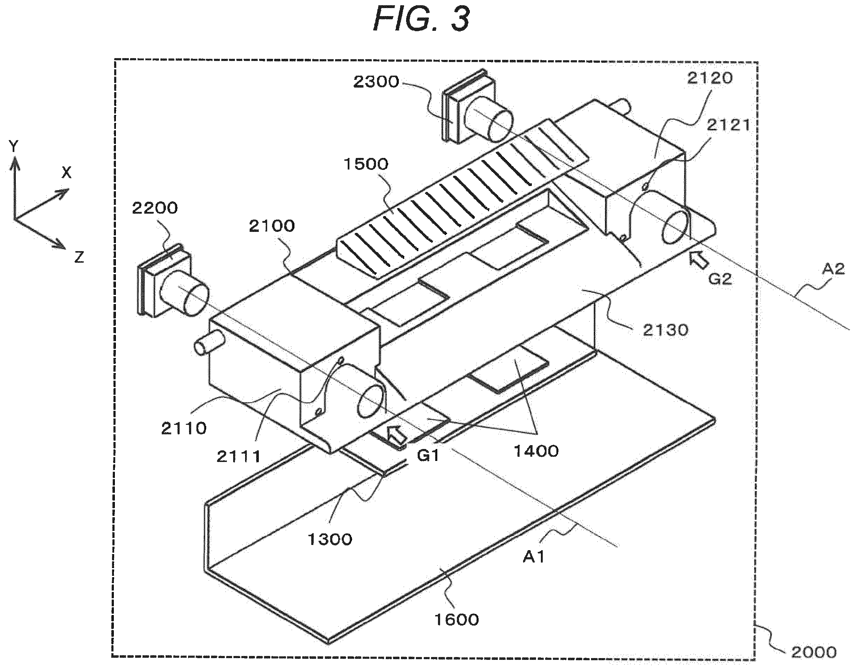

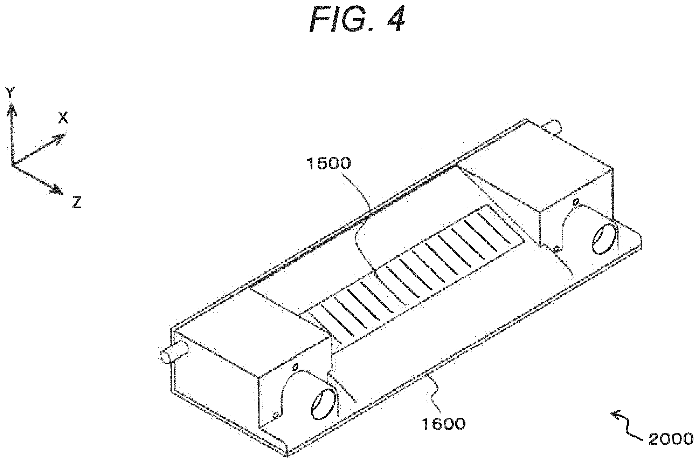

A second embodiment of the camera apparatus will be described with reference to FIGS. 3 and 4. In the following description, the same components as those in the first embodiment are assigned by the same reference signs, and differences will be mainly described. Points not particularly described are the same as those in the first embodiment. For example, the point of using the adhesive, the proportion of the inorganic fillers contained in the resin, and the like are not particularly described, but are the same as those in the first embodiment. The present embodiment is different from the first embodiment mainly in that two camera units are provided. Matters described in the first embodiment and not described in the present embodiment .are also applicable to the present embodiment unless there are special circumstances.

FIG. 3 is an exploded perspective view of a camera apparatus 2000, and FIG. 4 is an assembly view of the camera apparatus 2000. In the present embodiment, XYZ axes orthogonal to each other are defined. Hereinafter, description will be made with reference to FIGS. 3 and 4. The camera apparatus 2000 includes a housing 2100, a first camera unit 2200, a second camera unit 2300, a circuit board 1300, processing devices 1400, a heat dissipation member 1500, and a cover 1600. A first camera unit attachment portion 2110 and a second camera unit attachment portion 2120 are coupled by a housing central portion 2130.

As can be seen by comparing FIG. 3 and FIG. 4, in FIG. 3, the components are roughly moved in a Y-axis direction and are disassembled, and the first camera unit 2200 and the second camera unit 2300 are further moved in a Z direction. An optical axis A1 of the first camera unit 2200 and an optical axis A2 of the second camera unit 2300 are parallel to a Z-axis. The first camera unit 2200 and the second camera unit 2300 are arranged in an X-axis direction. In other words, a base line length direction of the camera apparatus 2000 is parallel to an X-axis.

As illustrated in FIGS. 3 and 4, the camera apparatus 2000 is a so-called stereo camera apparatus including two cameras. The camera apparatus 2000 calculates a distance to a subject based on a triangulation method from images obtained from the two camera units of which the optical axes are arranged substantially in parallel, that is, the first camera unit 2200 and the second camera unit 2300. Since the accuracy and reliability of the distance calculated by using the two cameras are higher than the accuracy and reliability of a monocular camera, the camera apparatus is often used in the driving assistance system such as the automatic brake.

The first camera unit 2200 includes a first lens unit 2210 and a first imaging element 2220. The first camera unit 2200 forms an image of optical information acquired from the outside by the first lens unit 2210 on the first imaging element 2220. The first camera unit 2200 is attached to the housing 2100 via a first attachment reference surface 2111 provided at the first camera unit attachment portion 2110 of the housing 2100. In FIG. 3, the first attachment reference surface 2111 is illustrated on the front side in the drawing, but is actually provided on the back side in the drawing.

The second camera unit 2300 includes a second lens unit 2310 and a second imaging element 2320. The second camera unit 2300 forms an image of optical information acquired from the outside by the second lens unit 2310 on the second imaging element 2320. The second camera unit 2300 is attached to the housing 2100 via a second attachment reference surface 2121 provided at the second camera unit attachment portion 2120 of the housing 2100,

The processing devices 1400 are mounted on the circuit board 1300, process pieces of image information acquired from the outside by the first camera unit 2200 and the second camera unit 2300, and calculate the distance to the subject. Although two processing devices 1400 are illustrated in FIG. 3, only one processing device 1400 may be present.

The heat dissipation member 1500 is in direct contact with the processing devices 1400 and dissipates heat generated from the processing devices 1400. However, the heat dissipation member 1500 may be in indirect contact with the processing devices 1400 via a heat dissipation gel, a heat dissipation sheet, or the like. The heat dissipation member 1500 may be divided into a plurality of parts. The cover 1600 is attached to the housing 2100 to physically protect internal components such as the first camera unit 2200, the second camera unit 2300, the circuit board 1300, and the processing device 1400.

At least the first camera unit attachment portion 2110 and the second camera unit attachment portion 2120 of the housing 2100 are resin-molded bodies containing inorganic fillers, and are coupled via the housing central portion 2130. Among the inorganic fillers contained in the first attachment reference surface 2111 and the second attachment reference surface 2121, a proportion of the inorganic fillers facing an in-plane direction of the reference surface is larger than a proportion of the inorganic fillers facing a perpendicular direction of the reference surface. At the housing central portion 2130, a proportion of the inorganic fillers oriented in the base line length direction, that is, the X-axis direction is larger than a proportion at the first camera unit 2200 and the second camera unit 2300.

The housing 2100 is formed by filling the resin containing the inorganic fillers from two locations of gates G1 and G2 shown in FIG. 3.

When the configurations of the camera apparatus 2000 and the camera apparatus 1000 according to the first embodiment are compared, differences are as follows. The camera unit attachment portion 1110 corresponds to the first camera unit attachment portion 2110 and the second camera unit attachment portion 2120. The camera unit 1200 corresponds to the first camera unit 2200 and the second camera unit 2300. The attachment reference surface 1111 corresponds to the first attachment reference surface 2111 and the second attachment reference surface 2121.

According to the aforementioned second embodiment, the following advantageous effects are obtained.

(4) The camera apparatus 2000 includes the first camera unit attachment portion 2110 and the second camera unit attachment portion 2120 corresponding to the camera unit attachment portion 1110, and the housing central portion 2130 coupling the first camera unit attachment portion 2110 and the second camera unit attachment portion 2120. The camera apparatus 2000 includes the first camera unit 2200 and the second camera unit 2300 corresponding to the camera unit 1200. The first camera unit 2200 is attached to the first camera unit attachment portion 2110. The second camera unit 2300 is attached to the second camera unit attachment portion 2120. The first camera unit 2200 and the second camera unit 2300 are attached to the housing 2100 via the first attachment reference surface 2111 and the second attachment reference surface 2121 such that the optical axes are substantially parallel to each other. At the first camera unit attachment portion 2110 and the second camera unit attachment portion 2120, the proportion of the inorganic fillers oriented in a Z-axis direction which is an optical axis direction is larger than the proportion at the housing central portion 2130, and at the housing central portion 2130, the proportion of the inorganic fillers oriented in the X-axis direction which is the base line length direction is larger than the proportion at the first camera unit attachment portion 2110 and the second camera unit attachment portion 2120.

Thus, although the camera apparatus 2000 has an elongated shape in the base line length direction, since the proportion of the inorganic fillers oriented in the X-axis direction which is the base line length direction is larger in the housing central portion 2130, relative positions and relative postures of the first camera unit 2200 and the second camera unit 2300 can be maintained with high accuracy. In the stereo camera apparatus, a state in which the optical axes of the two camera units are completely parallel is ideal, and when a relative angle between the optical axes deviates, an error occurs in a subject distance detection value. Accordingly, in the stereo camera apparatus, it is necessary to fix the positions of the optical components with higher accuracy than the monocular camera apparatus. That is, the stereo camera apparatus also has problems of accuracy and heat dissipation similarly to the monocular camera, but needs to have higher accuracy in a position and an angle. According to this configuration, since a variation in a base line length of the housing and warpage deformation are suppressed by the inorganic fillers oriented in the base line length direction, it is possible to suppress a deterioration in detection accuracy due to an external force such as vibration or a temperature change. When dimensions of the housing 2100 expand and contract due to a temperature change or the like, the first attachment reference surface 2111 and the second attachment reference surface 2121 are less likely to move in the optical axis direction, and a deviation in an angle between the first camera unit 2200 and the second camera unit 2300 is suppressed. Accordingly, it is possible to suppress the deterioration in the detection accuracy.

### -Third Embodiment-

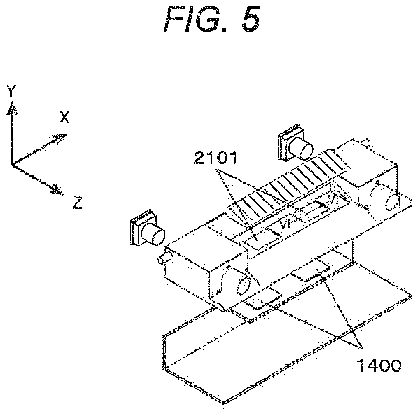

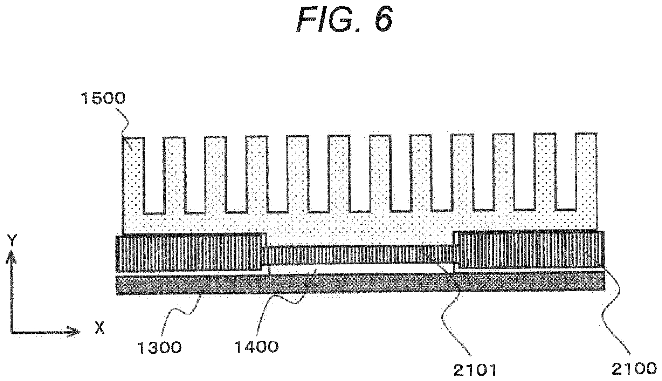

A third embodiment of the camera apparatus will be described with reference to FIGS. 5 and 6. It is noted that the third embodiment is not encompassed by the wording of the claims but is considered as useful for understanding the invention. In the following description, the same components as those in the first embodiment are assigned by the same reference signs, and differences will be mainly described. Points not particularly described are the same as those in the first embodiment. The present embodiment is different from the second embodiment mainly in that a housing 2100 has a thin portion.

FIG. 5 is an exploded perspective view of a camera apparatus 2000 according to the third embodiment. FIG. 6 is a cross section taken along a line VI-VI in FIG. 5. In the present embodiment, the housing 2100 includes a thin portion 2101 having a small wall thickness. FIG. 6 shows a cross section in the vicinity of the thin portion 2101. As illustrated in FIG. 6, the thin portion 2101 has recesses for both sides of a heat dissipation member 1500 and a circuit board 1300. The heat dissipation member 1500 has a protrusion, and the protrusion is accommodated in the recess by the thin portion 2101. At least a part of a processing device 1400 is accommodated in the recess of the thin portion 2101 on the side of the circuit board 1300.

That is, the thin portion 2101 is sandwiched between the heat dissipation member 1500 and the processing device 1400. Since a thickness of the housing 2100 between the heat dissipation member 1500 and the processing device 1400 is thinner than the thickness in the second embodiment, heat is easily moved from the processing device 1400 to the heat dissipation member 1500.

According to the aforementioned third embodiment, the following advantageous effects are obtained.

(5) There is the thin portion 2101 having the small wall thickness at the housing 2100. The thin portion 2101 is sandwiched between the heat dissipation member 1500 and the processing device 1400. Thus, the heat generated by the processing device 1400 can be efficiently transferred to the heat dissipation member 1500. In the present embodiment, although the efficiency of the heat transfer is further improved than the efficiency in the second embodiment, since a hole is not provided, reduction in rigidity can be minimized.

For example, in general, as means for attaching the heat dissipation member to the resin housing and dissipating the heat from the processing device, a method for arranging the heat dissipation member, the processing device, and the circuit board outside the housing as described in PTL 1 is conceivable. However, since an apparatus size increases, the method described in PTL 1 is unsuitable for the in-vehicle camera apparatus requiring space saving.

As another method, a method for bringing the processing device and the heat dissipation member into contact with each other by providing an opened portion in the housing and fitting the heat dissipation member into the opened portion is conceivable, but this method is unsuitable for the following reason. That is, since the rigidity of the housing is reduced by reducing the bulk of the housing, the housing may be deformed when an external force such as vibration is applied, and there is a concern that detection accuracy deteriorates.

### (Modification Example of Third Embodiment)

In the aforementioned third embodiment, as illustrated in FIG. 6, the thin portion 2101 has the recesses for both the sides of the heat dissipation member 1500 and the circuit board 1300. However, the thin portion 2101 may have a recess only on one side. For example, an end surface of the housing 2100 on the side of the heat dissipation member 1500 may be flat, and the recess may be provided only on the side of the circuit board 1300. In this case, an end surface of the heat dissipation member 1500 is flat as in the second embodiment.

### -Fourth Embodiment-

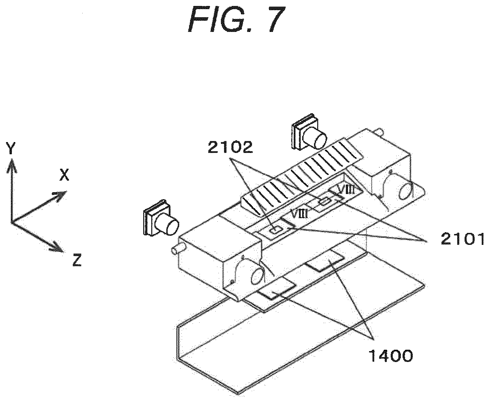

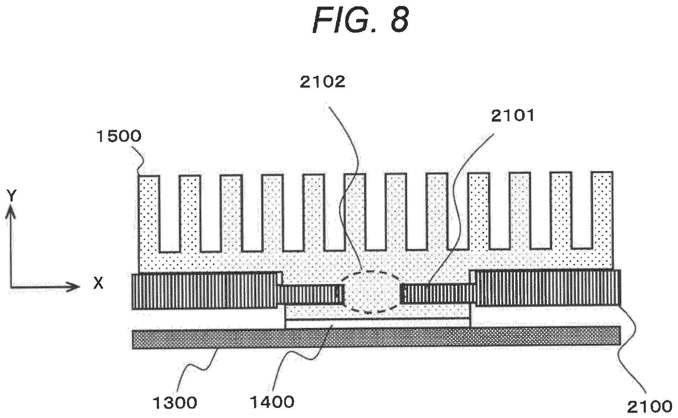

A fourth embodiment of the camera apparatus will be described with reference to FIGS. 7 and 8. It is noted that the fourth embodiment is not encompassed by the wording of the claims but is considered as useful for understanding the invention. In the following description, the same components as those in the first embodiment are assigned by the same reference signs, and differences will be mainly described. Points not particularly described are the same as those in the third embodiment. The present embodiment is different from the third embodiment mainly in that a through-hole is provided.

FIG. 7 is an exploded perspective view of a camera apparatus 2000 according to the fourth embodiment. FIG. 8 is a cross section taken along a line VIII-VIII in FIG. 7. A housing 2100 in the present embodiment has a thin portion 2101 as in the third embodiment, and further has a through-hole 2102 penetrating the housing 2100 in a Y-axis direction in the thin portion 2101. As illustrated in FIG. 8, a size of the through-hole 2102 is smaller than a size of a processing device 1400. A heat dissipation member 1500 is inserted into the through-hole 2102, and the heat dissipation member 1500 extends to the opening side of the through-hole 2102 on the processing device side. In the present embodiment, the housing 2100 is formed by insert molding.

According to the aforementioned fourth embodiment, the following advantageous effects are obtained.

(6) The through-hole 2102 smaller than the processing device 1400 is provided at the housing 2100. The heat dissipation member 1500 is inserted into the through-hole 2102, and the heat dissipation member 1500 extends to the opening side of the through-hole 2102 on the processing device 1400 side. Thus, the housing 2100 can more efficiently conduct the heat of the processing device 1400 to the heat dissipation member 1500.

### (Modification Example of Fourth Embodiment)

In the fourth embodiment, the housing 2100 may not have the thin portion 2101. That is, a thickness of the housing 2100 may be constant, and the through-hole 2102 may be provided at the housing 2100 between the processing device 1400 and the heat dissipation member 1500.

The aforementioned embodiments and modification examples may be combined with each other. Although various embodiments and modification examples have been described above, the present invention is not limited to these contents. Other aspects considered within the scope of the technical idea of the present invention are also included within the scope of the present invention, as far as they fall within the scope of the claims.

### Reference Signs List

- 1000, 2000: camera apparatus
- 1100, 2100: housing
- 1110: camera unit attachment portion
- 1111: attachment reference surface
- 1200: camera unit
- 1220: imaging element
- 1300: circuit board
- 1400: processing device
- 1500: heat dissipation member
- 1600: cover
- 1700: adhesive
- 2101: thin portion
- 2102: through-hole
- 2110: first camera unit attachment portion
- 2111: first attachment reference surface
- 2120: second camera unit attachment portion
- 2121: second attachment reference surface
- 2130: housing central portion
- 2200: first camera unit
- 2300: second camera unit

## Claims

1. A camera apparatus, comprising:
a housing (1100, 2100) that has a camera unit attachment portion (1110);
a camera unit (1200) that is attached to the camera unit attachment portion (1110) of the housing (1100, 2100);
a processing device (1400) that calculates a distance to a subject based on outside information acquired by the camera unit (1200);
a circuit board (1300) on which the processing device (1400) is mounted; and
a heat dissipation member (1500) that has thermal conductivity higher than thermal conductivity of the housing (1100, 2100), and dissipates heat generated by the processing device (1400),
wherein the camera unit attachment portion (1110) is a resin-molded body containing inorganic fillers,
an attachment reference surface (1111) is provided at the camera unit attachment portion (1110),
the camera unit (1200) is attached to the housing (1100, 2100) via the attachment reference surface (1111), and
at the reference surface, a proportion of the inorganic fillers oriented in an in-plane direction of the reference surface is larger than a proportion of the inorganic fillers oriented in an optical axis direction,
**characterized in that**:
the camera unit attachment portion (1110) includes a first camera unit attachment portion (2110) and a second camera unit attachment portion (2120),
the attachment reference surface (1111) includes a first attachment reference surface (2111) and a second attachment reference surface (2121),
the camera apparatus (1000, 2000) further includes a housing central portion (2130) that couples the first camera unit attachment portion (2110) and the second camera unit attachment portion (2120),
the camera unit (1200) includes a first camera unit (2200) and a second camera unit (2300),
the first camera unit (2200) is attached to the first camera unit attachment portion (2110),
the second camera unit (2300) is attached to the second camera unit attachment portion (2120),
the first camera unit (2200) and the second camera unit (2300) are attached to the housing (1100, 2100) via the first attachment reference surface (2111) and the second attachment reference surface (2121) such that optical axes are substantially parallel to each other,
the housing central portion (2130) is substantially orthogonal to optical axes of the first camera unit (2200) and the second camera unit (2300),
at the camera unit attachment portion (1110), a proportion of the inorganic fillers oriented in an optical axis direction of the first camera unit (2200) and the second camera unit (2300) is larger than at the housing central portion (2130), and
at the housing central portion (2130), a proportion of the inorganic fillers oriented in a direction substantially orthogonal to the optical axes of the first camera unit (2200) and the second camera unit (2300) is larger than at the camera unit attachment portion (1110).

2. The camera apparatus according to claim 1, further comprising
a cover (1600) that covers the processing device (1400) and the circuit board (1300) in cooperation with the housing (1100, 2100),
wherein the cover (1600) is fixed to the housing (1100, 2100) with an adhesive, and
elastic modulus of the adhesive is lower than elastic modulus of the housing (1100, 2100) and the cover (1600).

3. The camera apparatus according to claim 1, wherein the housing (1100, 2100) is a resin-molded body containing 20% to 80% of inorganic fillers, and the inorganic filler has a length of 50 µm to 500 µm and has an aspect ratio of 5 or more.

## Patentansprüche

1. Kameravorrichtung, die Folgendes umfasst:
ein Gehäuse (1100, 2100), das einen Kameraeinheit-Befestigungsabschnitt (1110) aufweist;
eine Kameraeinheit (1200), die an dem Kameraeinheit-Befestigungsabschnitt (1110) des Gehäuses (1100, 2100) befestigt ist;
eine Verarbeitungsvorrichtung (1400), die basierend auf externen Informationen, die von der Kameraeinheit (1200) erfasst werden, eine Entfernung zu einem Gegenstand berechnet;
eine Leiterplatte (1300), auf der die Verarbeitungsvorrichtung (1400) montiert ist; und
ein Wärmeableitungselement (1500), das eine höhere Wärmeleitfähigkeit aufweist als die Wärmeleitfähigkeit des Gehäuses (1100, 2100), und Wärme, die durch die Verarbeitungsvorrichtung (1400) erzeugt wird, ableitet,
wobei der Kameraeinheit-Befestigungsabschnitt (1110) ein aus Harz geformter Körper mit anorganischen Füllstoffen ist,
eine Befestigungsreferenzoberfläche (1111) an dem Kameraeinheit-Befestigungsabschnitt (1110) vorgesehen ist,
die Kameraeinheit (1200) über die Befestigungsreferenzoberfläche (1111) an dem Gehäuse (1100, 2100) befestigt ist, und
an der Referenzoberfläche ein Anteil der anorganischen Füllstoffe, die auf eine Richtung in der Ebene der Referenzoberfläche ausgerichtet sind, größer ist als ein Anteil der anorganischen Füllstoffe, die auf eine Richtung der optischen Achse ausgerichtet sind,
**dadurch gekennzeichnet, dass**:
der Kameraeinheit-Befestigungsabschnitt (1110) einen ersten Kameraeinheit-Befestigungsabschnitt (2110) und einen zweiten Kameraeinheit-Befestigungsabschnitt (2120) enthält,
die Befestigungsreferenzoberfläche (1111) eine erste Befestigungsreferenzoberfläche (2111) und eine zweite Befestigungsreferenzoberfläche (2121) enthält,
die Kameravorrichtung (1000, 2000) ferner einen zentralen Abschnitt (2130) des Gehäuses enthält, der den ersten Kameraeinheit-Befestigungsabschnitt (2110) und den zweiten Kameraeinheit-Befestigungsabschnitt (2120) koppelt,
die Kameraeinheit (1200) eine erste Kameraeinheit (2200) und eine zweite Kameraeinheit (2300) enthält,
die erste Kameraeinheit (2200) an dem ersten Kameraeinheit-Befestigungsabschnitt (2110) befestigt ist,
die zweite Kameraeinheit (2300) an dem zweiten Kameraeinheit-Befestigungsabschnitt (2120) befestigt ist,
die erste Kameraeinheit (2200) und die zweite Kameraeinheit (2300) über die erste Befestigungsreferenzoberfläche (2111) und die zweite Befestigungsreferenzoberfläche (2121) derart an dem Gehäuse (1100, 2100) befestigt sind, dass die optischen Achsen im Wesentlichen parallel zueinander sind,
der zentrale Abschnitt (2130) des Gehäuses im Wesentlichen senkrecht zu den optischen Achsen der ersten Kameraeinheit (2200) und der zweiten Kameraeinheit (2300) ist,
an dem Kameraeinheit-Befestigungsabschnitt (1110) ein Anteil der anorganischen Füllstoffe, die auf eine Richtung der optischen Achse der ersten Kameraeinheit (2200) und der zweiten Kameraeinheit (2300) ausgerichtet sind, größer ist als an dem zentralen Abschnitt (2130) des Gehäuses, und
an dem zentralen Abschnitt (2130) des Gehäuses ein Anteil der anorganischen Füllstoffe, die auf eine Richtung ausgerichtet sind, die im Wesentlichen senkrecht zu den optischen Achsen der ersten Kameraeinheit (2200) und der zweiten Kameraeinheit (2300) ist, größer ist als an dem Kameraeinheit-Befestigungsabschnitt (1110).

2. Kameravorrichtung nach Anspruch 1, die ferner Folgendes umfasst:
eine Abdeckung (1600), die die Verarbeitungsvorrichtung (1400) und die Leiterplatte (1300) im Zusammenwirken mit dem Gehäuse (1100, 2100) abdeckt,
wobei die Abdeckung (1600) mit einem Klebstoff an dem Gehäuse (1100, 2100) fixiert ist, und
der Elastizitätsmodul des Klebstoffs kleiner ist als der Elastizitätsmodul des Gehäuses (1100, 2100) und der Abdeckung (1600).

3. Kameravorrichtung nach Anspruch 1, wobei das Gehäuse (1100, 2100) ein aus Harz geformter Körper ist, der 20 % bis 80 % anorganische Füllstoffe beinhaltet, und der anorganische Füllstoff eine Länge von 50 µm bis 500 µm aufweist und ein Aspektverhältnis von 5 oder mehr aufweist.

## Revendications

1. Appareil de caméra, comprenant :
un boîtier (1100, 2100) qui a une portion d'attache d'unité de caméra (1110) ;
une unité de caméra (1200) qui est attachée à la portion d'attache d'unité de caméra (1110) du boîtier (1100, 2100) ;
un dispositif de traitement (1400) qui calcule une distance à un sujet sur la base d'informations extérieures acquises par l'unité de caméra (1200) ;
une carte à circuit (1300) sur laquelle le dispositif de traitement est monté (1400) ; et
un élément de dissipation de chaleur (1500) qui a une conductivité thermique plus élevée qu'une conductivité thermique du boîtier (1100, 2100), et qui dissipe une chaleur générée par le dispositif de traitement (1400),
dans lequel la portion d'attache unité de caméra (1110) est un corps moulé en résine contenant des charges inorganiques,
une surface de référence d'attache (1111) est prévue au niveau de la portion d'attache d'unité de caméra (1110),
l'unité de caméra (1200) est attachée au boîtier (1100, 2100) via la surface de référence d'attache (1111), et
au niveau de la surface de référence, une proportion des charges inorganiques orientées dans une direction dans un plan de la surface de référence est supérieure à une proportion des charges inorganiques orientées dans une direction d'axe optique,
**caractérisé en ce que** :
la portion d'attache d'unité de caméra (1110) inclut une première portion d'attache d'unité de caméra (2110) et une seconde portion d'attache d'unité de caméra (2120),
la surface de référence d'attache (1111) inclut une première surface de référence d'attache (2111) et une seconde surface de référence d'attache (2121),
l'appareil de caméra (1000, 2000) inclut en outre une portion centrale de boîtier (2130) qui couple la première portion d'attache d'unité de caméra (2110) et la seconde portion d'attache d'unité de caméra (2120), l'unité de caméra (1200) inclut une première unité de caméra (2200) et une seconde unité de caméra (2300),
la première unité de caméra (2200) est attachée à la première portion d'attache d'unité de caméra (2110),
la seconde unité de caméra (2300) est attachée à la seconde portion d'attache d'unité de caméra (2120),
la première unité de caméra (2200) et la seconde unité de caméra (2300) sont attachées au boîtier (1100, 2100) via la première surface de référence d'attache (2111) et la seconde surface de référence d'attache (2121) de telle sorte que des axes optiques sont sensiblement parallèles l'un à l'autre,
la portion centrale de boîtier (2130) est sensiblement orthogonale aux axes optiques de la première unité de caméra (2200) et de la seconde unité de caméra (2300),
au niveau de la portion d'attache d'unité de caméra (1110), une proportion des charges inorganiques orientées dans une direction d'axe optique de la première unité de caméra (2200) et de la seconde unité de caméra (2300) est supérieure par rapport au niveau de la portion centrale de boîtier (2130), et
au niveau de la portion centrale de boîtier (2130), une proportion des charges inorganiques orientées dans une direction sensiblement orthogonale aux axes optiques de la première unité de caméra (2200) et de la seconde unité de caméra (2300) est supérieure par rapport au niveau de la portion d'attache unité de caméra (1110).

2. Appareil de caméra selon la revendication 1, comprenant en outre
une couverture (1600) qui recouvre le dispositif de traitement (1400) et la carte à circuit (1300) en coopération avec le boîtier (1100, 2100),
dans lequel la couverture (1600) est fixée au boîtier (1100, 2100) avec un adhésif, et
un module d'élasticité de l'adhésif est inférieur au module d'élasticité du boîtier (1100, 2100) et de la couverture (1600).

3. Appareil de caméra selon la revendication 1, dans lequel le boîtier (1100, 2100) et un corps moulé en résine contenant 20 % à 80 % de charges inorganiques, et la charge inorganique a une longueur de 50 µm à 500 µm et a un rapport d'aspect de 5 ou plus.
